# EUROPEAN PATENT APPLICATION

(11) **EP 1 235 017 A1**
(43) Date of publication of application: **28.08.2002**
(21) Application number: 02003847.7
(22) Date of filing: 20.02.2002
(51) Int. Cl.: F16L 11/08

(54) **Refrigerant transporting hose**

(30) Priority: 23.02.2001 JP 2001047738
(71) Applicant: Tokai Rubber Industries, Ltd., Komaki-shi, Aichi-ken, 485-8550 (JP)
(72) Inventor: Arima, Tetsuya, Kasugai-shi, Aichi-ken, 480-0304 (JP); Onishi, Masanobu, Inuyama-shi, Aichi-ken, 484-0041 (JP); Kitamura, Keiichi, Kariya-city, Aichi-Pref., 448-8661 (JP); Yoshino, Makoto, Kariya-city, Aichi-Pref., 448-8661 (JP)
(74) Representative: Kuhnen & Wacker

(57) **Abstract**

A refrigerant transporting hose has a five-layered wall formed of an inner rubber layer, a middle rubber layer, an outer rubber layer, a first reinforcing layer formed between the inner and middle rubber layers and a second reinforcing layer formed between the middle and outer rubber layers. Each rubber layer has a thickness of at least 0.3 mm. Each reinforcing layer is a single layer of spirally wound reinforcing yarn, and the two reinforcing layers have substantially opposite spiral yarn directions. The hose having no resin layer in its wall is of improved flexibility, as well as retaining satisfactory pressure resistance, fluid impermeability and kink resistance.

## Description

### BACKGROUND OF THE INVENTION

### 1. Field of the Invention:

This invention relates to a hose for transporting a refrigerant. More particularly, it relates to a hose which does not kink easily, though its wall does not have any resin layer, while it is also improved in gas impermeability.

### 2. Description of the Related Art:

A known hose for transporting a refrigerant, e.g. 1,1,1,2-tetrafluoroethane (HFC134a), usually had an innermost wall layer formed from a resin. Such a hose was satisfactorily low in refrigerant permeability, but was too low in vibration absorbing capacity and flexibility to be suitable for use in transporting a refrigerant. Accordingly, there has been a strong demand for a hose having no resin layer in its wall, or at least having its innermost wall layer formed from rubber.

Japanese Patent No. 2,672,841, for example, discloses a hose of low gas permeability having a wall formed of an inner rubber layer, a reinforcing layer and an outer layer and not having any layer formed from a resin. Its inner rubber layer is formed from rubber having a high impermeability to HFC134a to make up for the insufficient gas impermeability which is due to the absence of any resin layer. Examples of such rubber are butyl rubber, chlorinated polyethylene rubber, chloroprene rubber and a mixture of two or more kinds of such rubber.

A hose having no resin layer in its wall is, however, low in its kink resistance, too. While its insufficient gas impermeability can be overcome by, for example, having its inner rubber layer formed from a selected material as stated above, its low kink resistance need be overcome by relying upon an improved reinforcing layer.

The reinforcing layer disclosed in Japanese Patent No. 2,672,841 is a single braided layer formed by an ordinary braiding method. A braided reinforcing layer is, however, low in production efficiency. A spirally wound reinforcing layer is high in production efficiency, but is generally low in kink resistance. It has, however, been found that a reinforcing layer of satisfactorily high kink resistance can be obtained by combining two spirally wound layers and an intermediate rubber layer disposed therebetween and having an appropriately selected thickness.

Experiments have indicated that a spirally wound layer of high thread density employed in the wall of a hose to ensure its satisfactory pressure resistance is likely to have a buckled fiber layer easily as a result of a bending force acting upon the hose. A buckled fiber layer means a bent fiber layer. Its buckling has a direct bearing upon the kinking of the hose and is not ignorable in view of the way in which a refrigerant transporting hose is installed, or its high possibility of vibration.

### SUMMARY OF THE INVENTION

It is, therefore, an object of this invention to provide a refrigerant transporting hose having a satisfactorily high kink resistance despite including no resin layer in its wall, while having a reinforcing fiber layer which ensures its satisfactorily high pressure resistance. It is another object of this invention to provide a hose having also a satisfactorily high gas impermeability.

As a result of researches by the inventors of this invention, it has been found that a spirally wound layer of high thread density in the wall of a hose is likely to buckle easily by a bending force acting upon the hose unless it is held tightly between two soft rubber layers. The rubber layers are required to have a thickness of at least 0.3 mm to hold the spirally wound layer effectively therebetween. A particularly desirable hose has in its wall two spirally wound layers having substantially opposite spiral fiber directions.

According to a first aspect of this invention, there is provided a refrigerant transporting hose having a wall comprising an inner rubber layer, a middle rubber layer, an outer rubber layer, a first reinforcing layer disposed between the inner and middle rubber layers and a second reinforcing layer disposed between the middle and outer rubber layers, each of the rubber layers having a thickness of at least 0.3 mm, the first and second reinforcing layers being each a single layer of spirally wound reinforcing yarn, and having substantially opposite spiral yarn directions from each other.

The hose having no resin layer in its wall is satisfactorily high in vibration absorbing capacity and flexibility. The middle rubber layer situated between the first and second reinforcing layers holds them tightly and thereby ensures the satisfactorily high kink resistance of the hose having no resin layer. The inner, middle and outer rubber layers each having a thickness of at least 0.3 mm are sufficient to hold the first and second reinforcing layers effectively therebetween. So, the reinforcing layers can be of high thread density to ensure the high pressure resistance of the hose without having the possibility of buckling easily by a bending force acting upon the hose, and the hose does not kink easily. Moreover, the reinforcing layers provide a well-balanced distribution of reinforcing yarns owing to their opposite spiral directions from each other, so that it is possible to overcome any curvature of the hose that is due to the spiral winding of reinforcing yarns, while also avoiding any concentration of stress on one of the reinforcing layers by an external force acting upon the hose.

According to a second aspect of this invention, at least one of the reinforcing layers of the first aspect is formed from polyester yarns. Polyester yarns are, among others, preferred for reinforcing purposes from various standpoints including strength, elongation, heat contraction and a finishing cost.

According to a third aspect of this invention, at least one of the reinforcing layers of the first or second aspect satisfies at least one of the following requirements:
(1) The yarns have a fineness of 2000 to 5000 deniers;
(2) The yarns have a twist number of 5 to 15 turns per length of 10 cm; and
(3) The layer is formed from 16 to 30 yarns per unit length.

The use of reinforcing yarns having a fineness of 2000 to 5000 deniers gives a good balance between the thickness of the fiber layer (or of the spirally wound yarn) and its strength. The yarns having a twist number of 5 to 15 turns per length of 10 cm give a good balance between the yarn density of the reinforcing layer and its strength. Moreover, the presence of 16 to 30 yarns per unit length gives a good balance between the yarn density of the layer and its burst pressure.

According to a fourth aspect of this invention, the second reinforcing layer of the first to third aspects is formed from a larger number of yarns than the first one is. This feature makes it possible to reduce any distorsion that may usually occur to a hose having a middle rubber layer between two spirally wound reinforcing layers as a result of the action of an internal pressure.

According to a fifth aspect of this invention, the inner rubber layer of the first to fourth aspects is formed from a material consisting mainly of butyl rubber (IIR) or halogenated butyl rubber. The layer formed from such a material is expected to be satisfactorily impermeable to HFC134a.

According to a sixth aspect of this invention, the outer rubber layer of the first to fifth aspects is formed from a material consisting mainly of an ethylene-propylene copolymer (EPM), an ethylene-propylene-diene terpolymer (EPDM), butyl rubber or halogenated butyl rubber. The layer is expected to be high in weatherability and heat resistance.

According to a seventh aspect of this invention, the middle rubber layer of the first to sixth aspects is of the same material as that of the inner and/or outer rubber layer. Every two adjoining rubber layers formed from the same material are expected to hold the reinforcing layer still more tightly therebetween.

According to an eighth aspect of this invention, the hose of the first to seventh aspects is used for transporting 1,1,1,2-tetrafluoroethane (HFC134a). The hose of this invention is suitable for, among others, transporting HFC134a.

The above and other features and advantages of the invention will become more apparent from the following description and the accompanying drawing.

### BRIEF DESCRIPTION OF THE DRAWING

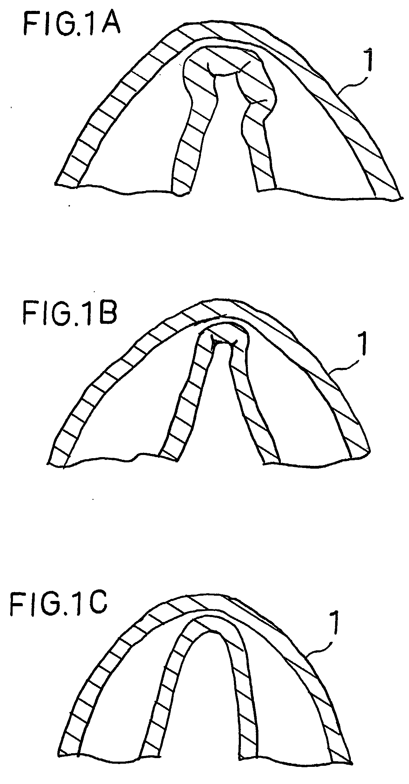

FIGS. 1A to 1C are fragmentary sectional views of hoses shown in their bent forms for evaluation as to kink resistance.

### DETAILED DESCRIPTION OF THE INVENTION

Description will now be made in further detail of this invention.

### Use of Refrigerant Transporting Hoses:

The refrigerant transporting hose according to this invention is preferably used in those environments which require high levels of flexibility, vibration resistance, pressure resistance and gas impermeability. It is preferably used for transporting HFC134a.

### Structural Features:

The hose of this invention has a wall formed of an inner rubber layer, a middle rubber layer, a first reinforcing layer disposed between the inner and middle rubber layers, an outer rubber layer and a second reinforcing layer disposed between the middle and outer rubber layers. All of the rubber layers have a thickness of at least 0.3 mm. Each of the reinforcing layers is a single layer of reinforcing yarn wound spirally in the opposite direction from the other. If even one of the rubber layers has a thickness of less than 0.3 mm, it is likely that a bending force acting upon the hose may cause one or both of the reinforcing layers to buckle easily, resulting in the easy kinking of the hose.

### Inner Rubber Layer:

The inner rubber layer preferably has a thickness of 1.0 to 2.0 mm. A layer having a thickness which is at least 0.3 mm and less than 1.0 mm may be somewhat unsatisfactory for ensuring a high fluid impermeability, though it may be satisfactory for holding the first reinforcing layer against buckling. A layer having a thickness over 2.0 mm may be relatively undesirable from a standpoint of extrusion efficiency, and cannot be expected to be more effective for holding the first reinforcing layer or realizing a higher fluid impermeability, either.

The material of the inner rubber layer is not limited. The inner rubber layer is preferably formed from a material consisting solely or mainly of butyl rubber or halogenated butyl rubber because of its high impermeability to HFC134a. The material may, therefore, be (1) butyl rubber, (2) halogenated butyl rubber, or (3) a mixture of (1) and (2).

### Middle Rubber Layer:

The middle rubber layer preferably has a thickness of 0.3 to 0.7 mm to ensure the effective holding of the first and second reinforcing layers against buckling. A layer having a thickness over 0.7 mm may be relatively undesirable as it is likely to make a hose too high in flexural rigidity for any satisfactory flexibility or vibration absorption, while it cannot be expected to hold the first or second reinforcing layer more effectively, either. The material of the middle rubber is not limited. The middle rubber layer is preferably formed from the same material as that of the inner and/or outer rubber layer to ensure its good adhesion thereto.

### Outer Rubber Layer:

The outer rubber layer preferably has a thickness of 0.7 to 1.5 mm. A layer having a thickness which is at least 0.3 mm, but less than 0.7 mm may fail to give a smooth hose surface, though it may be satisfactory for holding the second reinforcing layer against buckling. A layer having a thickness over 1.5 mm may be relatively undesirable from a standpoint of extrusion efficiency , and cannot be expected to be more effective for holding the second reinforcing layer or realizing a better hose surface, either.

The material of the outer rubber layer is not limited. The outer rubber layer is preferably formed from a material consisting solely or mainly of an ethylene-propylene copolymer, an ethylene-propylene-diene terpolymer, butyl rubber or halogenated butyl rubber to ensure high levels of weatherability and heat resistance and thereby the effective protection of the hose as whole.

### Reinforcing Layers:

The first and second reinforcing layers are each a single layer of reinforcing yarn wound spirally in the opposite direction from the other. The two layers are preferably formed by using the same number of yarns of the same kind having the same fineness and twist number, though it may sometimes be desirable as stated before that the second reinforcing layer be of a larger number of yarns than the first one is.

The number of the reinforcing yarn per hose length (number of yarns ) actually means thread density. The reinforcing yarn of the reinforcing layers is not restricted in fineness, kind, twist number and yarn number. They are preferably formed from any known kind of reinforcing yarns having a fineness of, say, 2000 to 5000 deniers. They are preferably formed from polyester yarns. Examples of polyester yarns are twist yarns of polyethylene terephthalate filaments, polyester filaments and a mixture thereof with filaments of any other material. The yarns preferably have a twist number of, say, 5 to 15 turns per length of 10 cm, though it is not strictly restricted. The layers are preferably formed from, say, 16 to 30 yarns per unit length, or in other words, they preferably have a yarn density of, say, 16 to 30 yarns.

### EMBODIMENTS

### PREPARATION OF HOSES:

Hoses were prepared by an ordinary process as shown in Table 1 at Examples 1 to 5 embodying this invention and Comparative Examples 1 to 4. The inside and outside diameters (I.D. and O.D.) of each hose and its wall thickness are shown in Table 1.

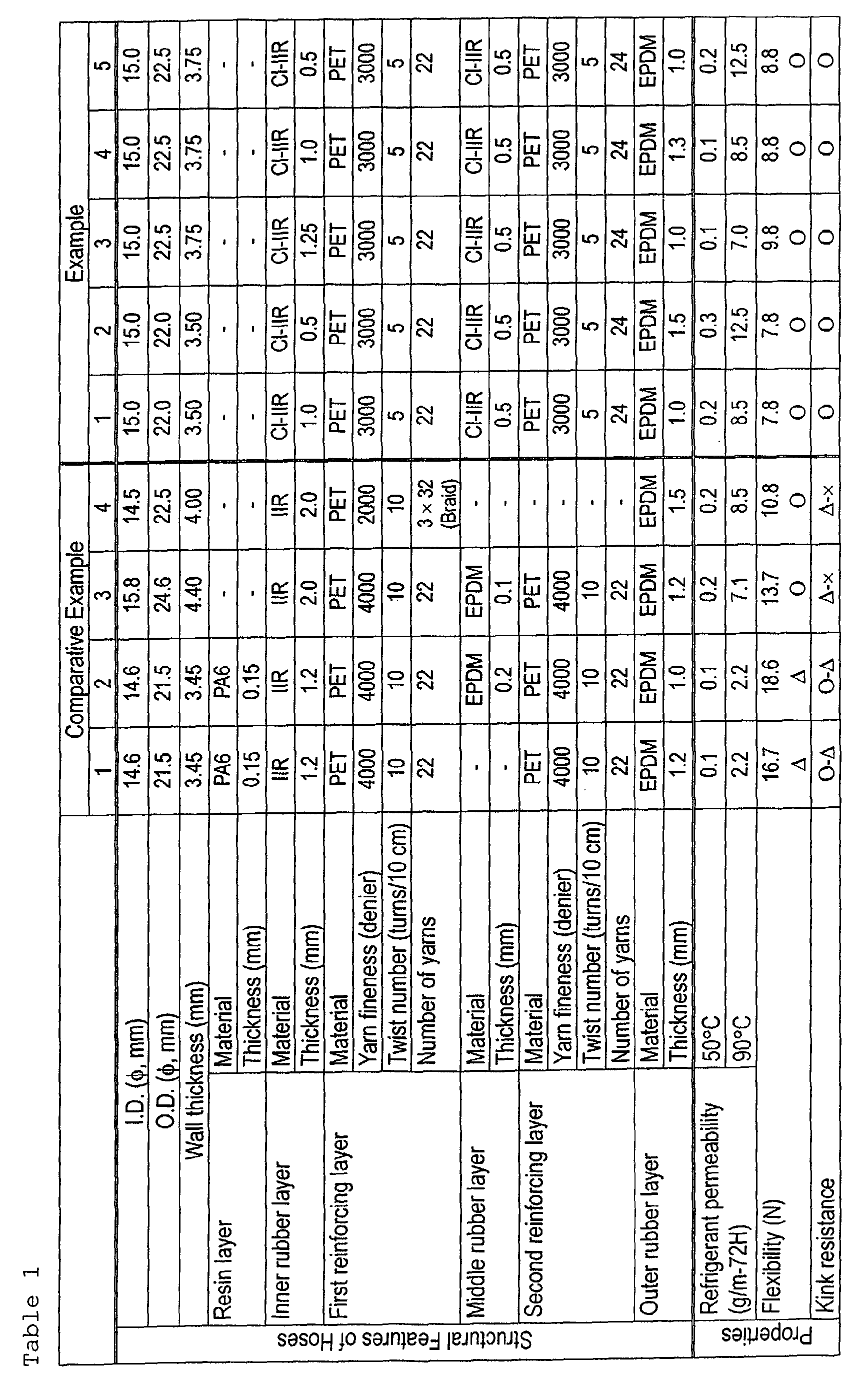

Every hose except those according to Comparative Examples 1 and 4 had its wall formed by an inner rubber layer, a middle rubber layer, an inner or first reinforcing layer formed by winding reinforcing yarn spirally in a single layer between the inner and middle rubber layers, an outer rubber layer and an outer or second reinforcing layer formed by winding reinforcing yarn spirally in a single layer between the middle and outer rubber layers in a direction opposite to the yarn of the first reinforcing layer. The hose according to Comparative Example 1 did not have any middle rubber layer. The hose according to Comparative Example 4 had its first reinforcing layer formed by braiding a first set of 16 yarns each consisting of three strands in one direction and a second set of 16 yarns in a different direction at an angle to the first set of yarns, and did not have any middle rubber, or second reinforcing layer. The hose according to each of Comparative Examples 1 and 2 had a resin layer formed from a polyamide (PA) resin inwardly of the inner rubber layer and having a thickness of 0.15 mm.

The materials of the reinforcing layers of each hose, the diameter (denier) and twist number(turns/10cm) of the yarns used to form each reinforcing layer by winding them spirally and the number of the spirally wound yarns are shown in Table 1 with the material and thickness of each rubber layer.

Each hose was tested for refrigerant permeability (g/m in 72 hours) at temperatures of 50°C and 90°C as follows. Each hose having a length of 600 mm was equipped with metal fittings at both ends, and supplied with 0.6 g of HFC134a per cubic centimeter of its volume. The hose was left to stand in an oven having a temperature of 50°C or 90°C, and its weight including that of its contents was measured after 24 and 96 hours, and a difference between its weights was calculated for comparison with a difference between its weights which had previously been measured in a similar way, but without any refrigerant therein. The latter difference was deducted from the former to give a difference to calculate the amount in grams of the permeation which had occurred per meter of hose length in those 72 hours. The results are shown in Table 1.

Each hose was also tested for flexibility (N) as follows. A pair of rollers were mounted at the same level of height so as to have a distance of 200 mm therebetween. Each hose having a length of 400 mm was placed on the rollers at right angles thereto, and a load was applied at a rate of 10 mm per minute to the hose at the middle point between the rollers until the maximum load causing the hose to kink. The results are shown at "Flexibillity (N)" in Table 1 by a numerical value indicating the kink load of each hose and a circular symbol indicating a load of less than 15 N or a triangular symbol indicating a load of 15 N or more.

Each hose was also tested for kink resistance as follows. A short metal rod was partly inserted into each of the open ends of each hose having a length of 300 mm. The two metal rods were gripped to bend the hose into a semicircular arc, and clamped in parallel to each other at the same level of height. Then, the rods were gradually moved toward each other, while being held in parallel to each other, and the hose was examined for any kinking when the rods had a distance of 70 mm therebetween. The results are shown in Table 1, in which each cross symbol indicates that the hose 1 kinked as shown in FIG. 1A, each circular symbol indicates that the hose 1 did not kink, as shown in FIG. 1C, and each triangular symbol indicates that the hose was shaped between the forms indicated by the cross and circular symbols, as shown in FIG. 1B.

While the invention has been described by way of its preferred embodiments, it is to be understood that variations or modifications may be easily made by anybody skilled in the art without departing from the scope of this invention which is defined by the appended claims.

## Claims

1. A refrigerant transporting hose having a wall comprising an inner rubber layer, a middle rubber layer, an outer rubber layer, a first reinforcing layer disposed between the inner and middle rubber layers and a second reinforcing layer disposed between the middle and outer rubber layers, each of the rubber layers having a thickness of at least 0.3 mm, the reinforcing layers being each a single layer of spirally wound reinforcing yarn, and having substantially opposite spiral yarn directions from each other.

2. The hose according to claim 1, wherein the yarn forming at least one of the reinforcing layers satisfies at least one of the following requirements:
(1) it has a fineness of 2000 to 5000 deniers;
(2) it has a twist number of 5 to 15 turns per 10 cm of its length; and
(3) it consists of 16 to 30 pieces of yarn per unit length.

3. The hose according to claim 1 or 2, wherein the inner rubber layer has a thickness of 1.0 to 2.0 mm.

4. The hose according to any of claims 1 to 3, wherein the inner rubber layer is composed of a material selected from athe group consisting of butyl rubber, halogenated butyl rubber and a mixture consisting mainly of at least one of them and further containing a different kind of rubber.

5. The hose according to any of claims 1 to 4, wherein the middle rubber layer has a thickness of 0.3 to 0.7 mm.

6. The hose according to any of claims 1 to 5, wherein the middle rubber layer is of the same material as that of at least one of the inner and outer rubber layers.

7. The hose according to any of claims 1 to 6, wherein the outer rubber layer has a thickness of 0.7 to 1.5 mm.

8. The hose according to any of claims 1 to 7, wherein the outer rubber layer is composed of a material selected from the group consisting of an ethylene-propylene copolymer, an ethylene-propylene-diene terpolymer, butyl rubber, halogenated butyl rubber and a mixture consisting at least one of them and further containing a different kind of rubber.

9. The hose according to any of claims 1 to 8, wherein the hose is a hose for transporting a refrigerant on a motor vehicle.

10. The hose according to any of claims 1 to 9, wherein the refrigerant is 1,1,1,2-tetrafluoroethane.
